(19) Europäisches Patentamt
European Patent Office
Office européen des brevets

(11) EP 2 652 022 B1

(12) **FASCICULE DE BREVET EUROPEEN**

(45) Date de publication et mention de la délivrance du brevet:
**21.02.2018 Bulletin 2018/08**

(21) Numéro de dépôt: **11804517.8**

(22) Date de dépôt: **09.12.2011**

(51) Int Cl.:
***C08K 3/04*** (2006.01) ***C08L 21/00*** (2006.01)
***C08J 3/215*** (2006.01) ***C08J 3/22*** (2006.01)

(86) Numéro de dépôt international:
**PCT/EP2011/072290**

(87) Numéro de publication internationale:
**WO 2012/080111 (21.06.2012 Gazette 2012/25)**

# (54) COMPOSITION ELASTOMERIQUE PRESENTANT UNE TRES BONNE DISPERSION DE LA CHARGE DANS LA MATRICE ELASTOMERIQUE

ELASTOMERE ZUSAMMENSETZUNG MIT SEHR GUTER DISPERSION DES ZUSCHLAGSTOFFES IN DER ELASTOMEREN MATRIX

ELASTOMERIC COMPOSITION EXHIBITING VERY GOOD DISPERSION OF THE FILLER IN THE ELASTOMERIC MATRIX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2010 FR 1060689**

(43) Date de publication de la demande:
**23.10.2013 Bulletin 2013/43**

(73) Titulaire: **Compagnie Générale des Etablissements Michelin**
**63000 Clermont-Ferrand (FR)**

(72) Inventeur: **THOMASSON, Damien**
**F-63040 Clermont-Ferrand Cdex 9 (FR)**

(74) Mandataire: **Cohen, Sylvia**
**M.F.P. MICHELIN**
**23, place des Carmes Déchaux**
**SGD/LG/PI - F35 - Ladoux**
**63040 Clermont-Ferrand Cedex 9 (FR)**

(56) Documents cités:
**EP-A1- 1 321 488** **GB-A- 744 509**
**US-A- 3 700 621** **US-A- 6 040 364**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 652 022 B1

**Description**

L'invention concerne une composition de caoutchouc à base d'au moins un élastomère diénique, d'une charge comprenant au moins du noir de carbone et d'une charge inorganique, en particulier de la silice, cette composition présentant une très bonne dispersion de charge dans la matrice élastomérique. L'invention concerne plus particulièrement la préparation d'une telle composition à base d'au moins un mélange maître comprenant l'élastomère diénique et le noir de carbone, le dit mélange maître présentant lui-même une très bonne dispersion du noir de carbone dans la matrice élastomérique.

On entend par « mélange maître » (couramment désigné par son nom anglais « masterbatch »): un composite à base d'élastomère dans lequel a été introduite une charge et éventuellement d'autres additifs.

La présente invention se rapporte en particulier à l'utilisation d'un tel mélange maître pour la fabrication de compositions de caoutchoucs diéniques renforcées d'un coupage de charge organique et de charge inorganique, destinées à la fabrication de pneumatiques ou de produits semi-finis pour pneumatiques, en particulier de bandes de roulement de ces pneumatiques.

Pour obtenir les propriétés de renforcement et d'hystérèse optimales conférées par une charge dans une bande de roulement de pneumatique et ainsi une haute résistance à l'usure et une basse résistance au roulement, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

Depuis que les économies de carburant et la nécessité de protéger l'environnement sont devenues une priorité, il s'est avéré nécessaire de produire des pneumatiques ayant une résistance au roulement réduite sans pénalisation de leur résistance à l'usure.

Ceci a été rendu notamment possible grâce à l'emploi, dans les bandes de roulement de ces pneumatiques, de nouvelles compositions de caoutchouc renforcées au moins partiellement de charges inorganiques, en particulier de silices spécifiques du type hautement dispersibles, capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant, ainsi qu'une adhérence améliorée sur sol mouillé, enneigé ou verglacé.

Cependant, pour des raisons d'affinités réciproques, ces particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues; ces interactions tendent d'autre part à augmenter la consistance à l'état cru des compositions caoutchouteuses et donc à rendre leur mise en oeuvre ("processability") plus difficile qu'en présence de noir de carbone, et ceci même pour des silices dites hautement dispersibles.

Il existe différentes méthodes pour obtenir un mélange maître d'élastomère diénique et de charge renforçante. EP1321488 décrit la préparation d'une composition à partir d'un mélange maître d'élastomère diénique et de silice. En particulier un type de solution consiste, pour améliorer la dispersiblité de la charge dans la matrice élastomérique, à procéder au mélange de l'élastomère et de la charge en phase « liquide ». Pour ce faire, on a fait appel à un élastomère sous forme de latex qui se présente sous forme de particules d'élastomère dispersées dans l'eau, et à une dispersion aqueuse de la charge, c'est-à-dire une charge dispersée dans de l'eau, couramment appelée « slurry ». Certains procédés en particulier, tels que ceux décrits dans le document US 6 048 923, permettent d'obtenir un mélange maître d'élastomère et de charge présentant une très bonne dispersion de la charge dans la matrice élastomérique, très améliorée par rapport à la dispersion de la charge dans la matrice élastomérique susceptible d'être obtenue lors du mélange en phase solide d'élastomère et de charge renforçante. Ce procédé consiste notamment à incorporer un flux continu d'un premier fluide constitué par un latex d'élastomère dans la zone de mélangeage d'un réacteur de coagulation, à incorporer un deuxième flux continu d'un deuxième fluide constitué par une dispersion aqueuse de charge sous pression dans la zone de mélangeage pour former un mélange avec le latex d'élastomère ; le mélangeage de ces deux fluides étant suffisamment énergétique pour permettre de coaguler quasiment complètement le latex d'élastomère avec la charge avant l'orifice de sortie du réacteur de coagulation puis à sécher le coagulum obtenu.

Ce procédé est particulièrement adapté pour réaliser un mélange maître présentant une très bonne dispersion, à partir d'un latex de caoutchouc naturel et de noir de carbone. En effet, l'application de ce procédé est rendue particulièrement favorable par l'aptitude que possèdent le latex de caoutchouc naturel et le noir de carbone de coaguler ensemble spontanément. A l'inverse, la silice ne coagule pas spontanément avec le latex de caoutchouc naturel car les agrégats de silice sont typiquement hydrophiles dans la nature et ont davantage d'affinité avec l'eau qu'avec les particules d'élastomère elles-mêmes.

Par ailleurs, un tel procédé présente une limite quant au taux de noir de carbone présent dans le mélange maître, or l'incorporation ultérieure de noir de carbone sous forme solide pour permettre une augmentation du taux de charge global dans la matrice élastomérique, ne permet pas de conserver les propriétés de très bonne dispersion de la charge dans la matrice élastomérique obtenues précédemment, et par conséquent, ne permet pas de conserver les avantages obtenus pour l'hystérèse.

La demanderesse a découvert de façon surprenante que contrairement à l'effet de l'ajout de noir de carbone sous forme solide et contrairement aux connaissances de l'homme du métier sur les difficultés de dispersion et de mise en oeuvre de la silice dans une matrice élastomérique, l'incorporation de silice dans un mélange maître d'élastomère diénique et de noir de carbone possédant une très bonne dispersion du noir de carbone dans la matrice d'élastomère diénique, notamment des mélanges maîtres préparés selon le procédé précité, permettait d'obtenir après introduction sous forme solide de silice de nouveaux mélanges maîtres ayant une hystérèse améliorée tout en conservant une très bonne dispersion de l'ensemble de la charge dans la matrice élastomérique.

L'invention a ainsi pour objet une composition de caoutchouc à base telle que définie dans la revendication 1 d'au moins un élastomère diénique, une charge comprenant au moins du noir de carbone et une charge inorganique avec un taux de charge inorganique inférieur ou égal à 50 parties en poids pour cent parties d'élastomère, pce, ainsi qu'un système de réticulation, caractérisée en ce que la dispersion de la charge dans la matrice élastomérique ayant une note Z supérieure ou égale à 80. Cette composition est obtenue à partir d'un premier mélange maître comprenant au moins l'élastomère diénique et le noir de carbone, et présentant une dispersion du noir de carbone dans la matrice élastomérique ayant une note Z supérieure ou égale à 90, et encore plus préférentiellement ce premier mélange maître est obtenu par mélangeage en phase liquide à partir d'un latex d'élastomère diénique et d'une dispersion aqueuse de noir de carbone.

Selon un mode de réalisation avantageux, un tel premier mélange maître est obtenu selon les étapes de procédé suivantes :

- alimenter un flux continu d'un latex d'élastomère diénique jusqu'à une zone de mélange d'un réacteur de coagulation définissant une zone allongée de coagulation s'étendant entre la zone de mélange et une sortie,
- alimenter un flux continu d'un fluide comprenant une charge sous pression dans la zone de mélange d'un réacteur de coagulation pour former un mélange coagulé,
- sécher le coagulum obtenu précédemment afin de récupérer le premier mélange maître.

Selon un mode de réalisation préféré, l'élastomère diénique de la composition est choisi dans le groupe constitué par les polybutadiènes, le caoutchouc naturel, les polyisoprènes de synthèse, les copolymères de butadiène, les copolymères d'isoprène et les mélanges de ces élastomères, et encore plus préférentiellement l'élastomère diénique est un caoutchouc naturel.

Selon un autre mode de réalisation préféré, la charge inorganique de la composition est une silice ou un noir de carbone recouvert de silice.

L'invention a également pour objet un procédé de préparation d'une composition comprenant au moins un élastomère diénique et une charge comprenant au moins un noir de carbone et une charge inorganique avec un taux de charge inorganique inférieur ou égal à 50 parties en poids pour cent parties d'élastomère, ainsi qu'un système de réticulation, qui comprend les étapes suivantes :

- préparation d'un premier mélange maître comprenant l'élastomère diénique et le noir de carbone, ce premier mélange maître présentant une dispersion de la charge dans la matrice élastomérique ayant une note Z supérieur ou égale à 90,
- incorporation de la charge inorganique, et des autres constituantes de la composition, à l'exception du système de réticulation, au premier mélange maître dans un mélangeur en malaxant thermomécaniquement le tout jusqu'à atteindre une température maximale comprise entre 130°C et 200°C,
- refroidir l'ensemble à une température inférieure à 100°C,
- incorporer ensuite : le système de réticulation;
- malaxer le tout jusqu'à une température maximale inférieure à 120°C.

Avantageusement, le mélange maître est réalisé en phase liquide à partir d'au moins un latex d'élastomère et d'une dispersion de noir de carbone et encore plus avantageusement le mélange maître est réalisé selon les étapes successives suivantes :

- alimenter un flux continu d'un latex d'élastomère diénique jusqu'à une zone de mélange d'un réacteur de coagulation définissant une zone allongée de coagulation s'étendant entre la zone de mélange et un orifice de sortie,
- alimenter un flux continu d'un fluide comprenant une charge sous pression dans la zone de mélange d'un réacteur

de coagulation pour former un mélange coagulé,
- sécher le coagulum obtenu précédemment afin de récupérer le premier mélange maître.

Selon un mode de réalisation préféré du procédé, l'élastomère diénique est un caoutchouc naturel et la charge inorganique est une silice, de préférence une silice de précipitation, ou un noir de carbone recouvert de silice.
L'invention concerne encore un procédé de préparation d'une composition de caoutchouc à base d'au moins un élastomère diénique, une charge comprenant au moins du noir de carbone et une charge inorganique avec un taux de charge inorganique inférieur ou égal à 50 parties en poids pour cent parties d'élastomère, ainsi qu'un système de réticulation, caractérisé en ce qu'il comprend les phases suivantes :

- Préparation d'un premier mélange maître d'élastomère diénique et de noir de carbone réalisé selon les étapes suivantes :
  - alimenter un flux continu d'un latex d'élastomère diénique jusqu'à une zone de mélange d'un réacteur de coagulation définissant une zone allongée de coagulation s'étendant entre la zone de mélange et une sortie,
  - alimenter un flux continu d'un fluide comprenant une charge sous pression dans la zone de mélange d'un réacteur de coagulation pour former un mélange coagulé,
  - sécher le coagulum obtenu précédemment afin de récupérer le premier mélange maître ;
- incorporation de la charge inorganique, et des autres constituantes de la composition, à l'exception du système de réticulation, au premier mélange maître obtenu précédemment, dans un mélangeur en malaxant thermomécaniquement le tout jusqu'à atteindre une température maximale comprise entre 130°C et 200°C,
- refroidir l'ensemble à une température inférieure à 100°C,
- incorporer ensuite : le système de réticulation;
- malaxer le tout jusqu'à une température maximale inférieure à 120°C.

Un mélange maître d'élastomère diénique et de charge qui comprend au moins un élastomère diénique et une charge comprenant au moins du noir de carbone et une charge inorganique avec un taux de charge inorganique inférieur ou égal à 50 parties en poids pour cent parties d'élastomère, est divulgué, caractérisé en ce que la dispersion de la charge dans la matrice élastomérique ayant une note Z supérieure ou égale à 80, et notamment obtenu par addition de la charge inorganique à un premier mélange maître comprenant au moins l'élastomère diénique et le noir de carbone, et présentant une dispersion du noir de carbone dans la matrice élastomérique ayant une note Z supérieure ou égale à 90.
De préférence le premier mélange maître est obtenu par obtenu par mélangeage en phase liquide à partir d'un latex d'élastomère diénique et d'une dispersion aqueuse de noir de carbone, et encore plus préférentiellement obtenu selon les étapes de procédé suivante :

- alimenter un flux continu d'un latex d'élastomère diénique jusqu'à une zone de mélange d'un réacteur de coagulation définissant une zone allongée de coagulation s'étendant entre la zone de mélange et une sortie,
- alimenter un flux continu d'un fluide comprenant une charge sous pression dans la zone de mélange d'un réacteur de coagulation pour former un mélange coagulé,
- sécher le coagulum obtenu précédemment afin de récupérer le premier mélange maître.

Un procédé de préparation d'un mélange maître est divulgué qui comprend au moins un élastomère diénique une charge comprenant au moins du noir de carbone et une charge inorganique avec un taux de charge inorganique inférieur ou égal à 50 parties en poids pour cent parties d'élastomère, obtenu par addition de la charge inorganique sur un premier mélange maître d'élastomère diénique et de noir de carbone réalisé selon les étapes suivantes :

- alimenter un flux continu d'un latex d'élastomère diénique jusqu'à une zone de mélange d'un réacteur de coagulation définissant une zone allongée de coagulation s'étendant entre la zone de mélange et une sortie,
- alimenter un flux continu d'un fluide comprenant une charge sous pression dans la zone de mélange d'un réacteur de coagulation pour former un mélange coagulé,
- sécher le coagulum obtenu précédemment afin de récupérer le premier mélange maître ;

ainsi que le mélange maître obtenu par ce procédé.
L'invention a enfin pour objet un article fini ou semi-fini, une bande de roulement de pneumatique, un pneumatique et un produit semi-fini comportant une composition telle que décrite précédemment.

## I. - MESURES ET TESTS

Les compositions de caoutchouc sont caractérisées, avant et après cuisson, comme indiqué ci-après.

### Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor (de petite taille) tourne au sein de l'éprouvette à 2 tours/minute et on mesure le couple utile pour entretenir ce mouvement après 4 minutes de rotation. La plasticité Mooney (MS 1+4) est exprimée en "unité Mooney" (UM, avec 1 UM = 0,83 Newton.mètre).

### Dispersion

D'une manière connue, la dispersion de charge dans une matrice élastomérique peut être représentée par la note Z, qui est mesurée, après réticulation, selon la méthode décrite par S. Otto et Al dans Kautschuk Gummi Kunststoffe, 58 Jahrgang, NR 7-8/2005, en accord avec la norme ISO 11345.

Le calcul de la note Z est basé sur le pourcentage de surface dans laquelle la charge n'est pas dispersée (« % surface non dispersée »), telle que mesurée par l'appareil « disperGRADER+ » fourni avec son mode opératoire et son logiciel d'exploitation « disperDATA » par la société Dynisco selon l'équation :

$$Z = 100 - (\%\ \text{surface non dispersée})/0.35$$

Le pourcentage de surface non dispersée est, quant à lui, mesuré grâce à une caméra observant la surface de l'échantillon sous une lumière incidente à 30°. Les points clairs sont associés à de la charge et à des agglomérats, tandis que les points foncés sont associés à la matrice de caoutchouc ; un traitement numérique transforme l'image en une image noir et blanche, et permet la détermination du pourcentage de surface non dispersée, telle que décrite par S.Otto dans le document précité.

Plus est la note Z haute, meilleure est la dispersion de la charge dans la matrice élastomérique (une note Z de 100 correspondant à une dispersion parfaite et une note Z de 0 à une dispersion médiocre). On considèrera qu'une note Z supérieure ou égale à 80 correspond à une surface présentant une très bonne dispersion de la charge dans la matrice élastomérique.

### Essais de traction

Ces essais de traction permettent de déterminer les contraintes d'élasticité et les propriétés à la rupture. Sauf indication différente, ils sont effectués conformément à la norme française NF T 46-002 de septembre 1988. On mesure en seconde élongation (i.e., après un cycle d'accommodation au taux d'extension prévu pour la mesure elle-même) le module sécant nominal (ou contrainte apparente, en MPa) à 100% d'allongement (notés MA100). Les mesures de traction pour déterminer les modules accomodés sécants sont effectuées à la température de 23°C +/-2°C, et dans les conditions normales d'hygrométrie (50 +/- 5% d'humidité relative).

Les contraintes à la rupture (en MPa) et les allongements à la rupture (en %) sont également mesurés. Toutes ces mesures de traction sont effectuées à la température de 60°C $\pm$ 2°C, et dans les conditions normales d'hygrométrie (50 $\pm$ 5% d'humidité relative), selon la norme française NF T 40-101 (décembre 1979).

### Déchirabilité

Les indices de déchirabilité sont mesurés à 100°C. On détermine notamment la force à exercer pour obtenir la rupture (FRD, en Mpa) et on mesure la déformation à rupture (DRD, en %) sur une éprouvette de dimensions 10 x 105 x 2,5 mm entaillée au centre de sa longueur sur une profondeur de 5 mm, pour provoquer la rupture de l'éprouvette.

### Propriétés dynamiques

Les propriétés dynamiques et notamment $\tan(\delta)_{max}$, représentative de l'hystérèse, sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, dans les conditions normales de température (23°C)

selon la norme ASTM D 1349-99, ou selon les cas à une température différente, en particulier dans les exemples cités, la température de mesure est de 60°C. On effectue un balayage en amplitude de déformation de 0,1% à 50% crête-crête (cycle aller), puis de 50% à 0,1% crête-crête (cycle retour). Les résultats exploités sont le module complexe de cisaillement dynamique (G*) et le facteur de perte tan(δ). Pour le cycle retour, on indique la valeur maximale de tan(δ) observée, noté $\tan(\delta)_{max}$,.

## II. DESCRIPTION DETAILLEE DE L'INVENTION

L'invention concerne une composition telle que définie dans la revendication 1 à base d'un mélange maître d'élastomère diénique et de charge renforçante qui comprend au moins un élastomère diénique et une charge comprenant au moins du noir de carbone et d'une charge inorganique avec un taux de charge inorganique inférieur ou égal à 50 parties en poids pour cent parties d'élastomère, et présentant une dispersion de la charge dans la matrice élastomérique ayant une note Z supérieure ou égale à 80, et plus préférentiellement une note Z supérieure ou égale à 90. Cette composition est obtenue par addition de charge inorganique à un premier mélange maître comprenant au moins l'élastomère diénique et le noir de carbone, et présentant une dispersion du noir de carbone dans la matrice élastomérique ayant une note Z supérieure ou égale à 90.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II-1) Elastomère diénique

De façon usuelle, on utilise indifféremment dans le texte les termes « élastomère » et « caoutchouc » qui sont interchangeables.

Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Parmi ces élastomères diéniques, on distingue par ailleurs le caoutchouc naturel et les élastomères synthétiques.

Par élastomères diéniques synthétiques susceptible d'être utilisé conformément à l'invention, on entend plus particulièrement par élastomère diénique:

(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le

vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 5 C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

En résumé, le ou les élastomères diéniques synthétiques selon l'invention sont choisis préférentiellement dans le groupe des élastomères diéniques fortement insaturés constitué par les polybutadiènes (en abrégé "BR"), les polyisoprènes (IR) de synthèse, les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Comme il a été précisé plus haut, les procédés de mélangeage en phase liquide sont préférentiellement utilisés pour permettre d'obtenir des mélanges maîtres à base d'élastomère diénique et de noir de carbone présentant une très bonne dispersion du noir de carbone dans l'élastomère. Ainsi notamment pour la réalisation du premier mélange maître d'élastomère diénique et de noir de carbone, on utilisera plus particulièrement un latex d'élastomère diénique, le latex d'élastomère étant une forme particulière de l'élastomère qui se présente sous forme de particules d'élastomère dispersées dans l'eau.

L'invention concerne donc préférentiellement les latex d'élastomères diéniques, les élastomères diéniques étant ceux définis précédemment.

Plus particulièrement, pour le caoutchouc naturel (NR) qui convient particulièrement à l'invention, ce caoutchouc naturel existe sous différentes formes comme le détail le chapitre 3 « Latex concentrates : properties and composition », de K.F. Gaseley, A.D.T. Gordon et T.D. Pendle dans « Naturel Rubber Science and Technology », A.D. Roberts, Oxford University Press - 1988.

En particulier plusieurs formes de latex de caoutchouc naturel sont commercialisés : les latex de caoutchouc naturel dits « de champ » (« field latex »), les latex de caoutchouc naturel dits « concentrés » (« concentrated natural rubber latex »), les latex epoxydés (« ENR »), les latex déprotéinisés ou encore les latex prévulcanisés. Le latex de caoutchouc naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une nouvelle concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite: « HA » (high ammonia) et de qualité dite « LA » ; on utilisera

avantageusement pour l'invention des latex de caoutchouc naturel concentrés de qualité HA.
Le latex de NR peut être préalablement modifié physiquement ou chimiquement (centrifugation, traitement enzymatique, modifiant chimique...)
Le latex peut être utilisé directement ou être préalablement dilué dans de l'eau pour faciliter sa mise en oeuvre.

Ainsi à tire de latex d'élastomère synthétique, le latex peut notamment consister en un élastomère diénique synthétique déjà disponible sous forme d'émulsion (par exemple un copolymère de butadiène et de styrène, SBR, préparé en émulsion), ou en un élastomère diénique synthétique initialement en solution (par exemple un SBR préparé en solution) qui est émulsifié dans un mélange de solvant organique et d'eau, généralement au moyen d'un agent tensio-actif.

Convient particulièrement à l'invention un latex de SBR, notamment un SBR préparé en émulsion ("ESBR") ou un SBR préparé en solution ("SSBR"), et plus particulièrement un SBR préparé en émulsion.
Il existe deux grands types de procédés de copolymerisation en émulsion du styrène et de butadiène, l'un d'entre eux, ou procédé à chaud (mis en oeuvre à une température proche de 50° C), étant adapté pour la préparation de SBR très ramifiés alors que l'autre, ou procédé à froid (mis en oeuvre à une température pouvant aller de 15° C à 40° C), permet d'obtenir des SBR plus linéaires.

Pour une description détaillée de l'efficacité de plusieurs émulsifiants utilisables dans ledit procédé à chaud (en fonction des taux desdits émulsifiants), on pourra par exemple se reporter aux deux articles de C. W. Carr, 1. M. Kolthoff, E. J. Meehan, University of Minesota, Minneapolis, Minesota qui ont paru dans Journal of Polymer Science de 1950, Vol. V, n°2, pp. 201-206, et de 1951, Vol. VI, n° 1, pp. 73-81.
Concernant des exemples comparatifs de mise en oeuvre dudit procédé à froid, on pourra par exemple se reporter à l'article ½ Industrial and Engineering Chemistry, 1948, Vol. 40, n° 5, pp. 932-937, E. J. Vandenberg, G. E. Hulse, Hercules Powder Company, Wilmington, Delaware + et a l'article ½ Industrial and Engineering Chemistry, 1954, Vol. 46, n° 5, pp. 1065-1073, J. R. Miller, H. E. Diem, B. F. Goodrich Chemical Co. , Akron, Ohio +.

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

On notera que l'on peut envisager d'utiliser un ou plusieurs latex de caoutchouc naturel en coupage, un ou plusieurs latex de caoutchouc synthétique en coupage ou un coupage un ou plusieurs latex de caoutchouc naturel avec un ou plusieurs latex de caoutchouc synthétique.

II-2) Charges

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N400, N660, N683, N772, N990).
A titre de noir de carbone, conviennent également les noirs de carbone partiellement ou intégralement recouverts de silice par un post traitement, ou les noirs de carbone modifiés in situ par de la silice tels que, à titre non limitatif, les charges qui commercialisées par la société Cabot Corporation sous la dénomination Ecoblack™ « CRX 2000 » ou « CRX4000 ».

Par "charge inorganique", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("*non-black filler*") par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement. Une telle charge se caractérise généralement par la présence de groupes fonctionnels, notamment hydroxyle (-OH), à sa surface, nécessitant pour être utilisée à titre de charge renforçante l'emploi d'un agent ou système de couplage destiné à assurer une liaison chimique stable entre l'élastomère isoprénique et ladite charge.
Une telle charge inorganique peut donc être utilisée avec un agent de couplage pour permettre le renforcement de la composition de caoutchouc dans laquelle elle est comprise. Elle peut également être utilisée avec un agent de recouvrement (qui n'assure pas de liaison entre la charge et la matrice élastomérique) en complément d'un agent de couplage ou non (dans ce cas la charge inorganique ne joue pas de rôle de renforcement).

L'état physique sous lequel se présente la charge inorganique est indifférent, que ce soit sous forme de poudre, de microperles, de granulés, de billes ou toute autre forme densifiée appropriée. Bien entendu on entend également

par charge inorganique des mélanges de différentes charges inorganiques, en particulier de charges siliceuses et/ou alumineuses hautement dispersibles telles que décrites ci-après.

Comme charges inorganiques conviennent notamment des charges minérales du type siliceuse, en particulier de la silice ($SiO_2$), ou du type alumineuse, en particulier de l'alumine ($Al_2O_3$). La silice utilisée peut être toute silice connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites "HDS"), on citera par exemple les silices Ultrasil 7000 et Ultrasil 7005 de la société Evonik, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Lorsque les compositions de l'invention sont destinées à des bandes de roulement de pneumatique à faible résistance au roulement, la charge inorganique utilisée, en particulier s'il s'agit de silice, a de préférence une surface BET comprise entre 45 et 400 $m^2/g$, plus préférentiellement comprise entre 60 et 300 $m^2/g$.

De manière préférentielle, conviennent particulièrement pour la présente invention les charges inorganiques dont la taille moyenne (en masse) est comprise entre 20 et 300nm, plus préférentiellement entre 20 et 150 nm. Cette taille moyenne est mesurée de manière classique après dispersion, par désagglomération aux ultrasons, de la charge à analyser dans l'eau ou une solution aqueuse contenant un agent tensioactif. Pour une charge inorganique telle que silice, la mesure est réalisée au moyen d'un sédimentomètre centrifuge à détection rayons X type "XDC" ("X-rays Disk Centrifuge"), commercialisé par la société Brookhaven Instruments, selon le mode opératoire qui suit. On réalise une suspension de 3,2 g d'échantillon de charge inorganique à analyser dans 40 ml d'eau, par action durant 8 minutes, à 60% de puissance (60% de la position maxi du "output control"), d'une sonde ultrasons de 1500 W (sonificateur Vibracell 3/4 pouce commercialisé par la société Bioblock); après sonification, on introduit 15 ml de la suspension dans le disque en rotation à une vitesse variant entre 3000 et 6000 tours par minute (la vitesse étant adaptée en fonction de la taille moyenne de la charge : plus la taille est petite, plus la vitesse est élevée) ; après sédimentation pendant 120 minutes, la distribution en masse des tailles de particules et la taille moyenne en masse des particules dw sont calculées par le logiciel du sédimentomètre "XDC" ($dw = \sum(ni\ di5) / \sum(ni\ di4)$ avec ni nombre d'objets de la classe de taille ou diamètre di).

De manière préférentielle, le taux de charge totale (noir de carbone et charge inorganique telle que silice) est compris entre 20 et 200 pce, plus préférentiellement entre 30 et 150 pce et encore plus préférentiellement entre 30 et 100 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise du noir de carbone dont le taux varie de 30 à 80 pce et une charge inorganique, en particulier de la silice, dont le taux varie de 5 à 50 pce, plus particulièrement la charge totale de la composition comprenant du noir de carbone dont le taux varie de 35 à 70 pce et une charge inorganique, en particulier de la silice, dont le taux varie de 5 à 35 pce, de façon encore plus préférentielle la charge totale comprenant du noir de carbone dont le taux varie de 40 à 65 pce et une charge inorganique, en particulier de la silice, dont le taux varie de 10 à 30 pce.

II-3) Mélanges maîtres - Composition de caoutchouc

Avantageusement les mélanges maîtres et les compositions ainsi réalisés sont susceptibles d'être utilisés dans les applications pour pneumatique.

Les compositions de caoutchouc pour pneumatique à base des mélanges maîtres et de charge inorganique selon l'invention, peuvent comporter également de façon connue un agent de couplage et/ou un agent de recouvrement et un système de vulcanisation.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) $Z - A - S_x - A - Z$

, dans laquelle:

- x est un entier de 2 à 8 (de préférence de 2 à 5) ;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Z répond à l'une des formules ci-après:

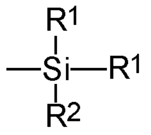 ; 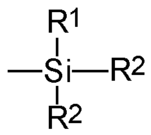 ; 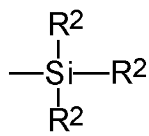 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane ($R^2$ = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'agent de recouvrement, on considérera généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des $\alpha,\omega$-dihydroxy-polyorganosiloxanes (notamment des $\alpha.,\omega$-dihydroxy-polydiméthylsiloxanes), des acides gras comme par exemple l'acide stéarique.

Dans les compositions de caoutchouc conformes à l'invention, la teneur en agent de couplage est préférentiellement comprise entre 0,1 et 12 % massique de la charge inorganique pour une surface de CTAB de 160m2/g plus préférentiellement entre 4 et 10 % massique de la charge inorganique pour une surface de CTAB de 160m$^2$/g ; et/ou la teneur en agent de recouvrement est préférentiellement comprise 0,1 et 20 % massique de la charge inorganique pour une surface de CTAB de 160m2/g plus préférentiellement entre 5 et 20 % massique de la charge inorganique pour une surface de CTAB de 160m$^2$/g. La teneur en agent de couplage pouvant être ajustée au niveau de surface spécifique de la charge.

L'homme du métier comprendra qu'à titre de charge équivalente de la charge inorganique décrite dans le présent paragraphe, pourrait être utilisée une charge d'une autre nature, notamment organique, dès lors que cette charge serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Ces compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation.

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

On notera que l'on peut également envisager de réaliser les mélanges maîtres conformes à l'invention en y incorporant, notamment avant la phase de séchage de la réalisation du mélange maître en phase liquide, des additifs tels que décrits précédemment, huile, antioxydant, agent de couplage, agent de recouvrement...

II-4). Fabrication des compositions de caoutchouc et des mélanges maîtres

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel l'invention, de tous les constituants de base des compositions de l'invention, à l'exception du système de vulcanisation, en particulier le mélange maître comportant le noir de carbone et la charge inorganique, et l'agent de couplage le cas échéant, sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C. La charge inorganique est incorporée à l'élastomère diénique et au noir de carbone qui ont été préalablement préparés sous forme d'un premier mélange maître.

Préférentiellement ce premier mélange maître est réalisé en phase « liquide ». Pour ce faire, on a fait appel à l'élastomère diénique sous forme de latex qui se présente sous forme de particules d'élastomère dispersées dans l'eau, et à une dispersion aqueuse du noir de carbone car, c'est-à-dire une charge dispersée dans de l'eau, couramment appelée « slurry ». Plus préférentiellement encore on suivra les étapes de procédé décrites dans le document US 6 048 923, qui consiste notamment à incorporer un flux continu d'un premier fluide constitué par le latex d'élastomère dans la zone de mélangeage d'un réacteur de coagulation, à incorporer un deuxième flux continu d'un deuxième fluide constitué par la dispersion aqueuse de noir de carbone sous pression dans la zone de mélangeage pour former un mélange avec le latex d'élastomère ; le mélangeage de ces deux fluides étant suffisamment énergétique pour permettre de coaguler quasiment complètement le latex d'élastomère avec le noir de carbone avant l'orifice de sortie du réacteur de coagulation puis à sécher le coagulum obtenu.

On notera en particulier que l'incorporation de la charge inorganique peut être réalisée simultanément à l'introduction dans le mélangeur des autres constituants (notamment l'élastomère diénique seul ou sous la forme d'un premier mélange maître) mais également avantageusement que cette incorporation peut être décalée dans le temps de quelques dizaines de secondes à quelques minutes.

A titre d'exemple, la première phase (non-productive) est conduite en une seule étape thermomécanique au cours de laquelle on introduit, dans un mélangeur approprié tel qu'un mélangeur interne usuel, tous les constituants nécessaires (sous forme le cas échéant de mélange maître comme on l'a précisé précédemment), les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min.

Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

Le système de réticulation est préférentiellement un système de vulcanisation, c'est-à-dire un système à base

de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule de tourisme, poids-lourds etc.

## III EXEMPLES DE REALISATION DE L'INVENTION

### III.1 Préparation de mélange- maître de caoutchouc naturel et de noir de carbone

Les premiers mélanges maîtres d'élastomère diénique et de noir de carbone présentant une note de dispersion de la charge dans la matrice élastomérique supérieure ou égale à 90, sont réalisés en phase liquide selon le procédé décrit dans le brevet U.S. Patent No 6,048,923.

Ainsi on prépare selon le protocole détaillé dans le brevet précité, un mélange maître à partir de noir de carbone N234 commercialisé par la société Cabot Corporation, et de latex de caoutchouc naturel de champs (« field latex ») en provenance de Malaisie présentant un extrait sec de caoutchouc de 28% et un taux d'ammoniac de 0,3%.

On obtient ainsi un mélange maître A de caoutchouc naturel et de noir de carbone N234 dans lequel le taux de noir de carbone est de 50 pce et qui présente une dispersion du noir dans la matrice de caoutchouc naturel ayant une note Z de 90.

### III-2 Préparation des compositions de caoutchouc

Les compositions témoins TM sont réalisés selon un procédé classique de mélangeage sous forme solide dans lequel l'élastomère donc du caoutchouc naturel dans ces exemples et la charge renforçante, dont le noir de carbone N234 commercialisé par la société Cabot Corporation et, le cas échéant, la silice de précipitation Ultrasil 7000 commercialisée par la société Evonik, sont introduits sous forme solide.

Les compositions de caoutchouc témoins TA non-conformes à l'invention sont réalisées à partir du mélange maître A auquel est ajouté selon un procédé classique de mélangeage sous forme solide du noir de carbone N234 commercialisé par la société Cabot Corporation.

Les compositions de caoutchouc CA conformes à l'invention sont réalisées à partir du premier mélange maître A auquel est ajouté selon un procédé classique de mélangeage sous forme solide (poudre ou granulés) de la silice de précipitation Ultrasil 7000 commercialisée par la société Evonik.

Les différentes compositions sont réalisés de la manière suivante :'

On procède pour les essais qui suivent de la manière suivante: on introduit dans un mélangeur interne, rempli à 70% et dont la température initiale de cuve est d'environ 90°C, le premier mélange maître A pour les compositions TA et CA (ou le caoutchouc naturel sous forme solide et le noir de carbone N234 pour les compositions TM), une deuxième charge, un agent de couplage et/ou de recouvrement le cas échéant puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C.

On récupère le mélange ainsi obtenu, on le refroidit puis on ajoute le système de vulcanisation (soufre et accélérateur sulfénamide) sur un mélangeur externe (homo-finisseur) à 70°C, en mélangeant le tout (phase productive) pendant environ 5 à 6 min. Lors de la présence d'agent de recouvrement, ce dernier peut aussi être introduit sur mélangeur externe au lieu de l'introduction sur mélangeur interne.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme

produits semi-finis pour pneumatiques, en particulier comme bandes de roulement de pneumatiques.

III-3 Exemple

Cet exemple a pour but de mettre en évidence les propriétés d'une composition de caoutchouc conforme à l'invention, améliorées vis-à-vis de compositions témoins non-conformes à l'invention du fait de la nature de leur charge renforçante ou de leur procédé de préparation.

Les compositions de caoutchouc TM1 à TM4 sont préparées « en masse » à partir de caoutchouc naturel et de noir de carbone et, le cas échéant de silice, sous forme solide comme détaillé dans le paragraphe III-2, les compositions témoins TA1 et TA2 et les compositions conformes à l'invention CA3 et CA4 sont respectivement préparés à partir d'un premier mélange maître A dans lesquels sont ajoutés une deuxième charge selon le procédé détaillé dans paragraphe III-2.

L'ensemble des compositions quelque soit le procédé de fabrication présente la formulation de base suivante (en pce) :

- caoutchouc naturel 100
- 6PPD (a) 1,5
- Plastifiant (b) 1
- Acide stéarique 2
- Oxyde de zinc (c) 3
- accélérateur(d) 1,1
- soufre 1,1

(a) N-1,3-diméthylbutyl-N-phényl-para-phénylènediamine ("Santoflex 6-PPD" de la société Flexsys) ;
(b) huile MES ("Catenex SNR" de Shell)
(c) oxyde de zinc (grade industriel - société Umicore
(d) N-cyclohexyl-2-benzothiazyl-sulfénamide ("Santocure CBS" de la société Flexsys).

En plus de ces constituants, les compositions TM1 à TM4 ; TA1, TA2, CA3 etCA4 se distinguent les unes des autres par la nature et le taux (en pce) de deuxième charge renforçante qu'elles incluent, détaillés dans le tableau 1 qui suit.

Tableau 1

| Composition | TM1 | TM2 | TM3 | TM4 | TA1 | TA2 | CA3 | CA4 |
|---|---|---|---|---|---|---|---|---|
| N234 (1) | - | - | - | - | 50 | 50 | 50 | 50 |
| N234 (2) | 57 | 65 | 50 | 50 | 7 | 15 | | |
| Silice | - | - | 7 | 15 | - | - | 7 | 15 |
| Silane (3) | - | - | 0,7 | 1,5 | - | - | 0,7 | 1,5 |
| (1) noir de carbone provenant du le mélange maître A<br>(2) noir de carbone ajouté au NR ou au mélange maître A par mélangeage standard sous forme solide<br>(3) TESPT ("SI69" de la société Evonik) | | | | | | | | |

Les propriétés mesurées avant et après caisson à 150°C pendant 40 minutes sont données dans le tableau 2 qui suit.

Tableau 2

| Composition | TM1 | TM2 | TM3 | TM4 | TA1 | TA2 | CA3 | CA4 |
|---|---|---|---|---|---|---|---|---|
| *Propriétés avant cuisson* | | | | | | | | |
| Mooney | 61 | 76 | 60 | 73 | 50 | 61 | 45 | 56 |
| *Propriétés après cuisson* | | | | | | | | |
| Note Z | 83 | 87 | 75 | 66 | 93 | 93 | 94 | 94 |
| MA100 | 2,4 | 2,9 | 2,3 | 2,3 | 2,4 | 3,0 | 2,2 | 2,3 |

(suite)

| Composition | TM1 | TM2 | TM3 | TM4 | TA1 | TA2 | CA3 | CA4 |
|---|---|---|---|---|---|---|---|---|
| MA300/MA100 | 1,29 | 1,28 | 1,24 | 1,22 | 1,39 | 1,33 | 1,39 | 1,30 |
| Déformation rupture | 537 | 479 | 563 | 539 | 512 | 506 | 552 | 540 |
| Contrainte rupture | 25,9 | 24,4 | 25,7 | 24,7 | 25,1 | 25,9 | 25,6 | 24,6 |
| DRD | 278 | 206 | 324 | 256 | 261 | 193 | 356 | 276 |
| Tan(δ)max | 0,213 | 0,233 | 0,184 | 0,201 | 0,208 | 0,255 | 0,164 | 0,190 |

La comparaison des compositions Témoins TM1, TM2 contenant uniquement du noir de carbone (respectivement 57 et 65 pce) avec les compositions TM3 et TM4 contenant 50 pce de noir et de la silice (respectivement 7 et 15 pce) permet de constater que l'introduction de silice permet une amélioration attendue de l'hystérèse (baisse de tan(δ)max) mais au détriment d'une dégradation importante de la dispersion de la charge renforcante (note Z).

Pour les compositions CA3 et CA4 réalisées à partir du mélange maître A présentant une très bonne dispersion, conformes à l'invention, et comparées respectivement aux compositions TM3 et TM4, on constate que l'ajout de silice au mélange maître permet d'abaisser l'hystérèse et de façon surprenante de conserver une très bonne dispersion d'une façon identique à celle obtenue avec le mélange maître A, et sans dégradation des autres propriétés. On constate également étonnamment une amélioration notable de la déchirabilité (valeur de DRD augmentée) et un abaissement de l'hystérèse (6 à 12%) pour les compositions CA3 et CA4 conformes à l'invention comparativement respectivement aux compositions TM3 et TM4, contrairement à ce qu'on observe avec l'addition de noir de carbone au mélange maître en comparant les compositions TA1 et TA2 respectivement aux compositions TM1 et TM2. Ces comparaisons sont mises en évidence dans le tableau 3 suivant, qui montre pour la déchirabilité et l'hystérèse le gain obtenu en pourcentage (étant entendu qu'un pourcentage positif représente une amélioration des ces propriétés, c'est-à-dire une augmentation de la déchirabilité et un abaissement de l'hystérèse) pour des compositions ayant une formulation identique (notamment même charges et même taux de ces charges) mais dont le mode de préparation, ce qui permet de mettre en évidence la synergie liée à la qualité de la dispersion et à la nature de la charge ajoutée.

Tableau 3

| Compositions comparées | CA3 vs TM3 | CA4 vs TM4 | TA1 vs TM1 | TA2vsTM2 |
|---|---|---|---|---|
| Gain en déchirabilité (%) | 10 | 8 | -6 | -6 |
| Gain en hystérèse (%) | 12 | 6 | -3 | -9 |

## Revendications

1. Composition de caoutchouc à base d'au moins un élastomère diénique, une charge comprenant au moins du noir de carbone et une charge inorganique, c'est-à-dire toute charge inorganique ou minérale, quelles que soient sa couleur et son origine par opposition au noir de carbone, avec un taux de charge inorganique inférieur ou égal à 50 parties en poids pour cent parties d'élastomère, pce, ainsi qu'un système de réticulation, **caractérisée en ce que** la composition est obtenue à partir d'un premier mélange maître comprenant au moins l'élastomère diénique et le noir de carbone, et présentant une dispersion du noir de carbone dans la matrice élastomérique ayant une note Z, telle que définie dans la description, supérieure ou égale à 90, auquel est ajouté la charge inorganique, la dispersion de la charge dans la matrice élastomérique ayant une note Z supérieure ou égale à 80.

2. Composition selon la revendication 1, dans laquelle le premier mélange maître est obtenu par mélangeage en phase liquide à partir d'un latex d'élastomère diénique et d'une dispersion aqueuse de noir de carbone.

3. Composition selon la revendication 2, dans laquelle le premier mélange maître est obtenu selon les étapes de procédé suivantes :

   - alimenter un flux continu d'un latex d'élastomère diénique jusqu'à une zone de mélange d'un réacteur de coagulation définissant une zone allongée de coagulation s'étendant entre la zone de mélange et une sortie,
   - alimenter un flux continu d'un fluide comprenant une charge sous pression dans la zone de mélange d'un réacteur de coagulation pour former un mélange coagulé,

- sécher le coagulum obtenu précédemment afin de récupérer le premier mélange maître.

**4.** Composition selon l'une quelconque des revendications 1 à 3, dans laquelle l'élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

**5.** Compositions selon la revendication 4, dans laquelle l'élastomère diénique est un caoutchouc naturel.

**6.** Composition selon l'une quelconque des revendications 1 à 5, dans laquelle la charge inorganique est une silice ou un noir de carbone recouvert de silice.

**7.** Composition selon l'une quelconque des revendications 1 à 6, dans laquelle le taux de noir de carbone est compris entre 30 et 80, de préférence entre 40 et 70 et le taux de charge inorganique est compris entre 5 et 50 pce, de préférence entre 10 et 30 pce.

**8.** Procédé de préparation d'une composition comprenant au moins un élastomère diénique et une charge comprenant au moins un noir de carbone et une charge inorganique, c'est-à-dire toute charge inorganique ou minérale, quelles que soient sa couleur et son origine par opposition au noir de carbone, avec un taux de charge inorganique inférieur ou égal à 50 parties en poids pour cent parties d'élastomère, ainsi qu'un système de réticulation, qui comprend les étapes suivantes :

- préparation d'un premier mélange maître comprenant l'élastomère diénique et le noir de carbone, ce premier mélange maître présentant une dispersion de la charge dans la matrice élastomérique ayant une note Z, telle que définie dans la description, supérieur ou égale à 90,
- incorporation de la charge inorganique, et des autres constituantes de la composition, à l'exception du système de réticulation, au premier mélange maître dans un mélangeur en malaxant thermomécaniquement le tout jusqu'à atteindre une température maximale comprise entre 130°C et 200°C,
- refroidir l'ensemble à une température inférieure à 100°C,
- incorporer ensuite : le système de réticulation;
- malaxer le tout jusqu'à une température maximale inférieure à 120°C.

**9.** Procédé selon la revendication 8, dans lequel le mélange maître est réalisé en phase liquide à partir d'au moins un latex d'élastomère et d'une dispersion de noir de carbone.

**10.** Procédé selon la revendication 9, dans lequel le mélange maître est réalisé selon les étapes successives suivantes :

- alimenter un flux continu d'un latex d'élastomère diénique jusqu'à une zone de mélange d'un réacteur de coagulation définissant une zone allongée de coagulation s'étendant entre la zone de mélange et un orifice de sortie,
- alimenter un flux continu d'un fluide comprenant une charge sous pression dans la zone de mélange d'un réacteur de coagulation pour former un mélange coagulé,
- sécher le coagulum obtenu précédemment afin de récupérer le premier mélange maître.

**11.** Procédé selon l'une quelconque des revendication 8 à 10, dans lequel le taux de noir de carbone est compris entre 30 et 80, de préférence entre 40 et 70 et le taux de charge inorganique est compris entre 5 et 50 pce, de préférence entre 10 et 30 pce.

**12.** Procédé de préparation d'une composition de caoutchouc à base d'au moins un élastomère diénique, une charge comprenant au moins du noir de carbone et une charge inorganique, c'est-à-dire toute charge inorganique ou minérale, quelles que soient sa couleur et son origine par opposition au noir de carbone, avec un taux de charge inorganique inférieur ou égal à 50 parties en poids pour cent parties d'élastomère, ainsi qu'un système de réticulation, **caractérisé en ce qu'**il comprend les phases suivantes :

- préparation d'un premier mélange maître d'élastomère diénique et de noir de carbone réalisé selon les étapes suivantes :

  - alimenter un flux continu d'un latex d'élastomère diénique jusqu'à une zone de mélange d'un réacteur de coagulation définissant une zone allongée de coagulation s'étendant entre la zone de mélange et une sortie,

- alimenter un flux continu d’un fluide comprenant une charge sous pression dans la zone de mélange d’un réacteur de coagulation pour former un mélange coagulé,
- sécher le coagulum obtenu précédemment afin de récupérer le premier mélange maître ;

- incorporation de la charge inorganique, et des autres constituantes de la composition, à l’exception du système de réticulation, au premier mélange maître obtenu précédemment, dans un mélangeur en malaxant thermomécaniquement le tout jusqu’à atteindre une température maximale comprise entre 130°C et 200°C,
- refroidir l’ensemble à une température inférieure à 100°C,
- incorporer ensuite : le système de réticulation;
- malaxer le tout jusqu’à une température maximale inférieure à 120°C.

**13.** Procédé selon la revendication 12, dans lequel l’élastomère diénique est un caoutchouc naturel.

**14.** Composition de caoutchouc obtenu par le procédé selon l’une quelconque des revendications 8 à 13.

**15.** Pneumatique ou produit semi-fini comportant au moins une composition selon l’une quelconque des revendications 1 à 7 ou 14.

## Patentansprüche

**1.** Kautschukzusammensetzung auf der Basis wenigstens eines Dienelastomers, eines Füllstoffs, der wenigstens Ruß umfasst, und eines anorganischen Füllstoffs, das heißt eines beliebigen anorganischen oder mineralischen Füllstoffs, gleich welcher Farbe und welchen Ursprungs, der von Ruß verschieden ist, mit einem Anteil an anorganischem Füllstoff, der kleiner oder gleich 50 Gewichtsteilen pro hundert Teile Elastomer, pce, ist, und eines Vernetzungssystems, **dadurch gekennzeichnet, dass** die Zusammensetzung aus einem ersten Masterbatch erhalten wird, das wenigstens das Dienelastomer und den Ruß umfasst und eine Dispersion des Rußes in der Elastomermatrix mit einer Note Z, wie sie in der Beschreibung definiert ist, aufweist, welche größer oder gleich 90 ist, zu welchem der anorganische Füllstoff zugegeben wird, wobei die Dispersion des Füllstoffs in der Elastomermatrix eine Note Z größer oder gleich 80 aufweist.

**2.** Zusammensetzung nach Anspruch 1, wobei das erste Masterbatch durch Mischen in flüssiger Phase aus einem Dienelastomerlatex und einer wässrigen Dispersion von Ruß erhalten wird.

**3.** Zusammensetzung nach Anspruch 2, wobei das erste Masterbatch gemäß den folgenden Verfahrensschritten erhalten wird:

- Zuführen eines kontinuierlichen Flusses eines Dienelastomerlatex in einen Mischungsbereich eines Koagulationsreaktors, der einen lang gestreckten Koagulationsbereich definiert, der sich zwischen dem Mischungsbereich und einem Ausgang erstreckt,
- Zuführen eines kontinuierlichen Flusses eines einen Füllstoff umfassenden Fluids unter Druck in den Mischungsbereich eines Koagulationsreaktors, um eine koagulierte Mischung zu bilden,
- Trocknen des zuvor erhaltenen Koagulats, um das erste Masterbatch zurückzugewinnen.

**4.** Zusammensetzung nach einem der Ansprüche 1 bis 3, wobei das Dienelastomer aus der Gruppe ausgewählt ist, die aus Polybutadienen, Naturkautschuk, synthetischen Polyisoprenen, Butadien-Copolymeren, Isopren-Copolymeren und Mischungen dieser Elastomere besteht.

**5.** Zusammensetzung nach Anspruch 4, wobei das Dienelastomer Naturkautschuk ist.

**6.** Zusammensetzung nach einem der Ansprüche 1 bis 5, wobei der anorganische Füllstoff ein Siliciumdioxid oder ein mit Siliciumdioxid beschichteter Ruß ist.

**7.** Zusammensetzung nach einem der Ansprüche 1 bis 6, wobei der Anteil an Ruß zwischen 30 und 80, vorzugsweise zwischen 40 und 70 und der Anteil an anorganischem Füllstoff zwischen 5 und 50 pce, vorzugsweise zwischen 10 und 30 pce liegt.

**8.** Verfahren zum Herstellen einer Zusammensetzung, die wenigstens ein Dienelastomer und einen Füllstoff, der

wenigstens einen Ruß umfasst, und einen anorganischen Füllstoff, das heißt eines beliebigen anorganischen oder mineralischen Füllstoffs, gleich welcher Farbe und welchen Ursprungs, der von Ruß verschieden ist, mit einem Anteil an anorganischem Füllstoff, der kleiner oder gleich 50 Gewichtsteilen pro hundert Teile Elastomer ist, und ein Vernetzungssystem umfasst, welches die folgenden Schritte umfasst:

- Herstellen eines ersten Masterbatch, welches das Dienelastomer und den Ruß umfasst, wobei dieses erste Masterbatch ein Dispersion des verstärkenden Füllstoffs in der Elastomermatrix mit einer Note Z, wie sie in der Beschreibung definiert ist, aufweist, die größer oder gleich 90 ist,
- Beimischen des anorganischen Füllstoffs und der anderen Bestandteile der Zusammensetzung mit Ausnahme des Vernetzungssystems zu dem ersten Masterbatch in einem Mischer, indem das Ganze thermomechanisch gemischt wird, bis eine maximale Temperatur zwischen 130°C und 200 °C erreicht wird,
- Abkühlen des Ganzen auf eine Temperatur unter 100 °C,
- anschließend Beimischen des Vernetzungssystems,
- Mischen des Ganzen bis zu einer maximalen Temperatur unter 120 °C.

**9.** Verfahren nach Anspruch 8, wobei das erste Masterbatch in flüssiger Phase aus wenigstens einem Elastomerlatex und einer Dispersion von Ruß hergestellt wird.

**10.** Verfahren nach Anspruch 9, wobei das Masterbatch gemäß den nachfolgenden Schritten erhalten wird:

- Zuführen eines kontinuierlichen Flusses eines Dienelastomerlatex in einen Mischungsbereich eines Koagulationsreaktors, der einen lang gestreckten Koagulationsbereich definiert, der sich zwischen dem Mischungsbereich und einer Ausgangsöffnung erstreckt,
- Zuführen eines kontinuierlichen Flusses eines einen Füllstoff umfassenden Fluids unter Druck in den Mischungsbereich eines Koagulationsreaktors, um eine koagulierte Mischung zu bilden,
- Trocknen des zuvor erhaltenen Koagulats, um das erste Masterbatch zurückzugewinnen.

**11.** Verfahren nach einem der Ansprüche 8 bis 10, wobei der Anteil an Rus zwischen 30 und 80, vorzugsweise zwischen 40 und 70 und der Anteil an anorganischem Füllstoff zwischen 5 und 50 pce, vorzugsweise zwischen 10 und 30 pce liegt.

**12.** Verfahren zum Herstellen einer Kautschukzusammensetzung auf der Basis wenigstens eines Dienelastomers, eines Füllstoffs, der wenigstens Ruß umfasst, und eines anorganischen Füllstoffs, das heißt eines beliebigen anorganischen oder mineralischen Füllstoffs, gleich welcher Farbe und welchen Ursprungs, der von Ruß verschieden ist, mit einem Anteil an anorganischem Füllstoff, der kleiner oder gleich 50 Gewichtsteilen pro hundert Teile Elastomer ist, und eines Vernetzungssystems, **dadurch gekennzeichnet, dass** es die folgenden Schritte umfasst:

- Herstellen eines ersten Masterbatch aus Dienelastomer und Ruß, hergestellt gemäß den folgenden Schritten:
- Zuführen eines kontinuierlichen Flusses eines Dienelastomerlatex in einen Mischungsbereich eines Koagulationsreaktors, der einen lang gestreckten Koagulationsbereich definiert, der sich zwischen dem Mischungsbereich und einem Ausgang erstreckt,
- Zuführen eines kontinuierlichen Flusses eines einen Füllstoff umfassenden Fluids unter Druck in den Mischungsbereich eines Koagulationsreaktors, um eine koagulierte Mischung zu bilden,
- Trocknen des zuvor erhaltenen Koagulats, um das erste Masterbatch zurückzugewinnen;
- Beimischen des anorganischen Füllstoffs, der anderen Bestandteile der Zusammensetzung mit Ausnahme des Vernetzungssystems zu dem ersten Masterbatch in einem Mischer, indem das Ganze thermomechanisch gemischt wird, bis eine maximale Temperatur zwischen 130 °C und 200 °C erreicht wird,
- Abkühlen des Ganzen auf eine Temperatur unter 100 °C,
- anschließend Beimischen des Vernetzungssystems,
- Mischen des Ganzen bis zu einer maximalen Temperatur unter 120 °C.

**13.** Verfahren nach Anspruch 12, wobei das erste Dienelastomer Naturkautschuk ist.

**14.** Kautschukzusammensetzung, erhalten durch das Verfahren nach einem der Ansprüche 8 bis 13.

**15.** Reifen oder Halbfabrikat, welcher wenigstens eine Zusammensetzung nach einem der Ansprüche 1 bis 7 oder 14 aufweist.

## Claims

1. Rubber composition based on at least one diene elastomer, a filler comprising at least carbon black and an inorganic filler, i.e. any inorganic or mineral filler, whatever its colour and its origin in contrast to carbon black, with an inorganic filler content of less than or equal to 50 parts by weight per hundred parts of elastomer, phr, and also a crosslinking system, **characterized in that** the composition is obtained from a first masterbatch comprising at least the diene elastomer and the carbon black, and having a dispersion of the carbon black in the elastomeric matrix that has a Z value, as defined in the description, of greater than or equal to 90, to which is added the inorganic filler, the dispersion of the filler in the elastomeric matrix having a Z value of greater than or equal to 80.

2. Composition according to Claim 1, in which the first masterbatch is obtained by liquid-phase compounding starting from a diene elastomer latex and an aqueous dispersion of carbon black.

3. Composition according to Claim 2, in which the first masterbatch is obtained according to the following process steps:

   - feeding a continuous flow of a diene elastomer latex to a mixing zone of a coagulation reactor defining an elongate coagulation zone extending between the mixing zone and an outlet,
   - feeding a continuous flow of a fluid comprising a filler under pressure to the mixing zone of a coagulation reactor to form a coagulated mixture,
   - drying the coagulum obtained above in order to recover the first masterbatch.

4. Composition according to any one of Claims 1 to 3, in which the diene elastomer is selected from the group consisting of polybutadienes, natural rubber, synthetic polyisoprenes, butadiene copolymers, isoprene copolymers and blends of these elastomers.

5. Composition according to Claim 4, in which the diene elastomer is a natural rubber.

6. Composition according to any one of Claims 1 to 5, in which the inorganic filler is a silica or a silica-covered carbon black.

7. Composition according to any one of Claims 1 to 6, in which the content of carbon black is between 30 and 80, preferably between 40 and 70, and the content of inorganic filler is between 5 and 50 phr, preferably between 10 and 30 phr.

8. Process for preparing a composition comprising at least one diene elastomer and a filler comprising at least one carbon black and an inorganic filler, i.e. any inorganic or mineral filler, whatever its colour and its origin in contrast to carbon black, with an inorganic filler content of less than or equal to 50 parts by weight per hundred parts of elastomer, and also a crosslinking system, which comprises the following steps:

   - preparing a first masterbatch comprising the diene elastomer and the carbon black, this first masterbatch having a dispersion of the filler in the elastomeric matrix that has a Z value, as defined in the description, of greater than or equal to 90,
   - incorporating the inorganic filler, and the other constituents of the composition, with the exception of the crosslinking system, into the first masterbatch in a mixer by thermomechanically kneading everything until a maximum temperature of between 130°C and 200°C is reached,
   - cooling the combined mixture to a temperature below 100°C,
   - subsequently incorporating the crosslinking system,
   - kneading everything up to a maximum temperature below 120°C.

9. Process according to Claim 8, in which the masterbatch is produced in the liquid phase from at least one elastomer latex and a dispersion of carbon black.

10. Process according to Claim 9, in which the masterbatch is produced according to the following successive steps:

   - feeding a continuous flow of a diene elastomer latex to a mixing zone of a coagulation reactor defining an elongate coagulation zone extending between the mixing zone and an outlet orifice,
   - feeding a continuous flow of a fluid comprising a filler under pressure to the mixing zone of a coagulation reactor to form a coagulated mixture,

- rying the coagulum obtained above in order to recover the first masterbatch.

**11.** Process according to any one of Claims 8 to 10, in which the content of carbon black is between 30 and 80, preferably between 40 and 70, and the content of inorganic filler is between 5 and 50 phr, preferably between 10 and 30 phr.

**12.** Process for preparing a rubber composition based on at least one diene elastomer, a filler comprising at least carbon black and an inorganic filler, i.e. any inorganic or mineral filler, whatever its colour and its origin in contrast to carbon black, with an inorganic filler content of less than or equal to 50 parts by weight per hundred parts of elastomer, and also a crosslinking system, **characterized in that** it comprises the following phases:

- preparation of a first masterbatch of diene elastomer and of carbon black, produced according to the following steps:
- feeding a continuous flow of a diene elastomer latex to a mixing zone of a coagulation reactor defining an elongate coagulation zone extending between the mixing zone and an outlet,
- feeding a continuous flow of a fluid comprising a filler under pressure to the mixing zone of a coagulation reactor to form a coagulated mixture,
- drying the coagulum obtained above in order to recover the first masterbatch,
- incorporating the inorganic filler, and the other constituents of the composition, with the exception of the crosslinking system, into the first masterbatch obtained above, in a mixer by thermomechanically kneading everything until a maximum temperature of between 130°C and 200°C is reached,
- cooling the combined mixture to a temperature below 100°C,
- subsequently incorporating the crosslinking system,
- kneading everything up to a maximum temperature below 120°C.

**13.** Process according to Claim 12, in which the diene elastomer is a natural rubber.

**14.** Rubber composition obtained by the process according to any one of Claims 8 to 13.

**15.** Tyre or semi-finished product comprising at least one composition according to any one of Claims 1 to 7 or 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1321488 A
- US 6048923 A
- FR 2740778
- US 6013718 A
- WO 2008141702 A
- FR 2765882
- US 5977238 A
- WO 0192402 A
- US 6815473 B
- WO 2004096865 A
- US 20060089445 A
- EP 1127909 A
- US 6503973 B
- WO 2009000750 A
- WO 2009000752 A
- WO 0316837 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 0210269 A


### Littérature non-brevet citée dans la description


- **S. OTTO et al.** *Kautschuk Gummi Kunststoffe,* 2005, vol. 58 (7-8
- Latex concentrates : properties and composition. **K.F. GASELEY ; A.D.T. GORDON ; T.D. PENDLE.** Naturel Rubber Science and Technology. Oxford University Press, 1988
- **C. W. CARR ; 1. M. KOLTHOFF ; E. J. MEEHAN.** Journal of Polymer Science. University of Minesota, 1950, vol. V, 201-206
- JOURNAL OF POLYMER SCIENCE. 1951, vol. VI, 73-81
- **E. J. VANDENBERG ; G. E. HULSE.** Industrial and Engineering Chemistry. Hercules Powder Company, 1948, vol. 40, 932-937
- **J. R. MILLER ; H. E. DIEM.** Industrial and Engineering Chemistry. B. F. Goodrich Chemical Co, 1954, vol. 46, 1065-1073